# EUROPÄISCHE PATENTSCHRIFT

(11) **EP 2 004 975 B1**
(45) Veröffentlichungstag und Bekanntmachung des Hinweises auf die Patenterteilung: **27.08.2014**
(21) Anmeldenummer: 07726930.6
(22) Anmeldetag: 15.03.2007
(51) Int. Cl.: F02D 41/30, F02D 41/40

(54) **VERFAHREN ZUM BETREIBEN EINER BRENNKRAFTMASCHINE**
METHOD FOR OPERATING AN INTERNAL COMBUSTION ENGINE
PROCEDE POUR FAIRE FONCTIONNER UN MOTEUR A COMBUSTION INTERNE

(30) Priorität: 05.04.2006 DE 102006016037
(43) Veröffentlichungstag der Anmeldung: 24.12.2008
(73) Patentinhaber: Robert Bosch GmbH, 70442 Stuttgart (DE)
(72) Erfinder: SCHENK, Peter, 71640 Ludwigsburg (DE); WEISS, Ruediger, 71159 Moetzingen (DE); RAIMANN, Juergen, 71263 Weil der Stadt (DE); AMLER, Markus, 71229 Leonberg-Gebersheim (DE); PORTEN, Guido, 71665 Vaihingen/Enz (DE)
(86) Internationale Anmeldenummer: PCT/EP2007/052440
(87) Internationale Veröffentlichungsnummer: WO 2007/115892

(56) Entgegenhaltungen:
- WO-A-2004/027237
- WO-A-2005/100768
- DE-A1- 19 936 201
- US-A- 4 621 599

## Beschreibung

### Stand der Technik

Die Erfindung betrifft ein Verfahren zum Betreiben einer Brennkraftmaschine nach dem Oberbegriff des Anspruchs 1. Gegenstand der Erfindung sind ferner ein Computerprogramm, ein elektrisches Speichermedium sowie eine Steuer- und/oder Regeleinrichtung.

In der Veröffentlichung "Die neue Emissionsstrategie der Benzin-Direkteinspritzung", MTZ 11/2003, Seiten 916 bis 923, wird die Möglichkeit eines "Schichtstarts" beschrieben. Im Gegensatz zu einem homogenen Niederdruckstart, bei dem während eines Ansaugtaktes eingespritzt wird, wird die Einspritzung beim Schichtstart erst spät während des Kompressionstaktes abgesetzt. Hierdurch ergibt sich ein geschichtetes Kraftstoff-Luftgemisch mit einer fetten Gemischwolke im Bereich der Zündkerze.

Der Vorteil eines solchen Schichtstarts gegenüber einem herkömmlichen Niederdruckstart liegt darin, dass vor allem bei niedrigen Umgebungs- und Motortemperaturen eine geringere Anreicherung erforderlich ist, was das Emissionsverhalten der Brennkraftmaschine verbessert. Eine solche Anreicherung ist erforderlich, da ein Anteil des eingespritzten Kraftstoffes im Start als Wandfilm an den kalten Brennraumwänden haften bleibt und somit nicht in vollem Umfang an der eigentlichen Verbrennung während der Startphase teilnimmt. Der solchermaßen unverbrannte Kraftstoff wird unverbrannt ausgeschoben und führt zu unerwünschten HC-Emissionen. Zum Ausgleich der an der Verbrennung nicht teilnehmenden Kraftstoffmasse muss die Einspritzmenge entsprechend erhöht werden. Beim homogenen Niederdruckstart sind Anreicherungsfaktoren von 2 bis 3 über der stöchiometrischen Menge nicht ungewöhnlich.

Nach der üblicherweise ungefähr 1 bis 2 Sekunden dauernden Schichtstartphase, also nach den allerersten Einspritzungen und Zündungen, schließt sich eine Katalysatorheizphase an, während der eine Homogen-Split-Einspritzung durchgeführt wird. In der oben genannten Veröffentlichung wird hierzu vorgeschlagen, eine erste Einspritzung während des Ansaugtaktes abzusetzen, durch die ein mageres und homogenes Grundgemisch im Brennraum erzeugt wird. Danach erfolgt eine zweite Einspritzung während des anschließenden Verdichtungstaktes, durch die eine fette Gemischwolke im Bereich der Zündkerze bereitgestellt wird. Die Zündung erfolgt vergleichsweise spät kurz nach dem oberen Totpunkt zwischen dem Verdichtungstakt und dem sich anschließenden Expansionstakt. Hierdurch wird eine späte Schwerpunktlage der Verbrennung realisiert, was zur Folge hat, dass ein Großteil der frei werdenden Energie nicht in mechanische Energie umgewandelt sondern im Abgasstrom als Wärme freigesetzt wird. Hierdurch ist ein sehr schnelles Aufheizen eines Katalysators möglich. Die Erzeugung der Ladungsschichtung wird in beiden Fällen vorzugsweise durch ein strahlgeführtes Verfahren erzeugt.

Aus der DE 10 2004 017 989A1 und aus der WO 2004 027 237 ist ferner bekannt, im Betrieb mit sehr magerem Ladungsgemisch eine Voreinspritzung während eines Ansaugtaktes und eine Haupteinspritzung während eines Verdichtungstaktes unmittelbar vor der Zündung abzusetzen. Dabei ist die Gemischaufbereitung jedoch nicht optimal.

### Offenbarung der Erfindung

### Technische Aufgabe

Aufgabe der vorliegenden Erfindung ist es, ein Verfahren für den Betrieb einer fremdgezündeten Brennkraftmaschine mit Kraftstoff-Direkteinspritzung bereitzustellen, mit dem die Emissionen und der Kraftstoffverbrauch reduziert werden können.

### Technische Lösung

Die gestellte Aufgabe wird durch ein Verfahren mit den Merkmalen des Anspruchs 1 gelöst. Weitere Lösungsmöglichkeiten sind in nebengeordneten Patentansprüchen angegeben, die ein Computerprogramm, ein elektrisches Speichermedium sowie eine Steuer- und/oder Regeleinrichtung betreffen. Vorteilhafte Weiterbildungen der Erfindung sind in Unteransprüchen angegeben. Darüber hinaus finden sich für die Erfindung wesentliche Merkmale in der nachfolgenden Beschreibung und in den Zeichnungen. Dabei können die besagten Merkmale für die Erfindung auch in ganz unterschiedlichen Kombinationen wesentlich sein, ohne dass hierauf explizit hingewiesen wird.

### Vorteilhafte Wirkungen

Bei dem erfindungsgemäßen Verfahren kann auch bei unterschiedlichsten und armen Ladungsschichtungen im Brennraum eine sichere Entflammung gewährleistet werden. Damit wird der Betriebsbereich der Brennkraftmaschine erheblich erweitert, ohne dass Zündaussetzer zu befürchten sind. Die eigentliche drehmomenterzeugende Haupteinspritzung kann jedoch weiterhin auf jenen Einspritzwinkel während des Verdichtungs- oder Kompressionstaktes gelegt werden, bei dem eine gewünschte Ladungsschichtung und Gemischaufbereitung am besten gewährleistet ist. Hierdurch werden gleichzeitig Emissionen und Verbrauch gesenkt. Die Menge der Haupteinspritzung (die auch durch eine Mehrfacheinspritzung eingebracht werden kann) ist deutlich größer als die Menge der Zündeinspritzung. Die Zündeinspritzung selbst ist so gering, dass sie nicht oder zumindest nicht wesentlich zum Drehmoment der Brennkraftmaschine beiträgt und auch den Kraftstoffverbrauch nicht wesentlich erhöht. Mit ihr wird lediglich in einem sehr kleinen Bereich direkt bei der Zündkerze ein so fettes Gemisch erzeugt, dass sich eine "Zündfackel" im Brennraum ergibt, die das im Normalfall magere Restgemisch sicher entflammen kann.

Die Zündeinspritzung erfolgt unmittelbar vor der Zündung noch vor Erreichen des oberen Totpunkts zwischen Verdichtungs- und Expansionstakt. Unmittelbar bedeutet, dass der Abstand, in Grad Kurbelwinkel (°KW) ausgedrückt, maximal etwa 5 °KW, vorzugsweise nur etwa 1 °KW beträgt. Gegebenenfalls können Zündung und Zündeinspritzung auch gleichzeitig erfolgen. Der Zündwinkel liegt üblicherweise im Bereich eines Kurbelwinkels von etwa 15 °KW vor dem oberen Totpunkt, also noch im Verdichtungstakt.

Durch das erfindungsgemäße Verfahren kann insbesondere bei niedrigen Umgebungstemperaturen die für einen sicheren Schichtstart erforderliche Anreicherung des Kraftstoffs nochmals reduziert werden, was sich günstig insbesondere auf die HC-Emissionen der Startphase auswirkt. Es kann sogar ein Schichtstart mit einem mageren Startlambda realisiert werden. Beispielsweise kann die Brennkraftmaschine bei einer Motortemperatur von ca. 20°C mit einem Lambdawert von 1 bis 1,5, bei optimierten Brennverfahren sogar mit einem Lambdawert >2 mager gestartet werden. Das zu realisierende Startlambda hängt dabei vorteilhafterweise neben der Motortemperatur von verschiedenen Parametern ab, beispielsweise von der Kraftstoffqualität, der Umgebungstemperatur, etc.. Durch das erfindungsgemäße Verfahren wird während der Startphase auch die Verbrennung verbessert beziehungsweise stabilisiert, was sich ebenfalls günstig auf das Niveau der Emissionen während der Startphase auswirkt. Ferner zeigt eine solchermaßen betriebene Brennkraftmaschine eine erhöhte Robustheit gegenüber unterschiedlichen Kraftstoffqualitäten. Das Startverhalten bei einer Betankung mit "Schlechtkraftstoff" wird also zuverlässiger.

Realisiert wird dies dadurch, dass während der Startphase, also den allerersten Einspritzungen bzw. Umdrehungen der Kurbelwelle, während des Verdichtungstaktes mindestens eine Haupteinspritzung, vorzugsweise bei einem Kurbelwinkel von ungefähr 80 - 30 °KW vor dem oberen Totpunkt zwischen Verdichtungstakt und Expansionstakt, abgesetzt wird. Durch sie wird Kraftstoff in die vorverdichtete und damit vorgewärmte Luft im Brennraum eingespritzt. Danach erfolgt die Zündeinspritzung.

Erfindungsgemäß wird ferner, nach dem Ende der Startphase eine Katalysatorheizphase mit einer Homogen-Split-Einspritzung und einem Zündwinkel durchgeführt, der im Expansionstakt, also nach dem oberen Totpunkt zwischen Verdichtungstakt und Expansionstakt liegt. Der Übergang zwischen der Startphase und der Katalysatorheizphase kann nämlich im Wesentlichen lediglich durch eine vorzugsweise kontinuierliche Spätverstellung des Zündwinkels realisiert werden, was einfach appliziert und so durchgeführt werden kann, dass das von der Brennkraftmaschine erzeugte Drehmoment nicht oder zumindest nicht merklich beeinflusst wird.

Zur Auslösung der Zündeinspritzung wird nur wenig Rechenkapazität benötigt, wenn diese, vorzugsweise deren Ende, wenigstens mittelbar an den Kurbelwinkel der Zündung gekoppelt ist.

Dabei kann der Abstand der Zündeinspritzung von der Zündung wenigstens zeitweise starr sein, was wiederum Ressourcen schont. Ein besseres Emissions- und Startverhalten wird aber erreicht, wenn der Abstand der Zündeinspritzung von der Zündung wenigstens zeitweise von mindestens einer Zustandsgröße (z.B. Anzahl Einspritzungen) der Brennkraftmaschine abhängt

Besonders bevorzugt ist es, wenn zusätzlich mindestens eine Einspritzung während eines Ansaugtaktes erfolgt, vorzugsweise bei einem Kurbelwinkel im Bereich von etwa 280 °KW vor dem oberen Totpunkt zwischen Verdichtungs- und Expansionstakt. Damit wird vorzugsweise während der Startphase ein Verfahren realisiert, welches einer Kombination eines Hochdruck-Schichtstartverfahrens und eines Homogen-Split-Einspritzverfahrens entspricht. So können die Vorteile einer strahlgeführten Homogen-Split-Einspritzung bereits während der Startphase, das heißt ohne den sonst üblichen späten Zündwinkel, wie er zum Heizen eines Katalysators erforderlich ist, genutzt werden. Ein solches Verfahren zeichnet sich durch eine besonders robuste Verbrennung bei gleichzeitig geringem Emissionsniveau aus. Auch für die Vermeidung des Klopfens kann ein solches Verfahren interessant sein.

Das Emissionsniveau kann nochmals reduziert werden, wenn die die Startphase charakterisierenden Parameter nicht starr sind, sondern von Umgebungszustandsgrößen und/oder Betriebsgrößen der Brennkraftmaschine abhängen. Insbesondere können die Aufteilung der Einspritzmenge und/oder die Kurbelwinkel der Einspritzungen von mindestens einer Umgebungszustandsgröße, insbesondere einer Umgebungstemperatur und/oder einer Ansauglufttemperatur, und/oder von mindestens einer Betriebsgröße der Brennkraftmaschine, insbesondere einer relativen Füllung und/oder einer Temperatur einer Komponente der Brennkraftmaschine und/oder von einem Zündwinkel abhängen.

### Kurze Beschreibung der Zeichnungen

Nachfolgend wird ein besonders bevorzugtes Ausführungsbeispiel der vorliegenden Erfindung unter Bezugnahme auf die beiliegende Zeichnung näher erläutert. In der Zeichnung zeigen:
- Figur 1: eine schematische Darstellung einer Brennkraftmaschine mit mehreren Zylindern mit jeweils einem Brennraum;
- Figur 2: einen teilweisen Schnitt durch einen Bereich eines Zylinders der Brennkraftmaschine von Figur 1; und
- Figur 3: ein Diagramm, in dem Kraftstoffeinspritzungen und Zündungen der einzelnen Zylinder von Figur 1 über einem Kurbelwinkel aufgetragen sind.

### Ausführungsformen der Erfindung

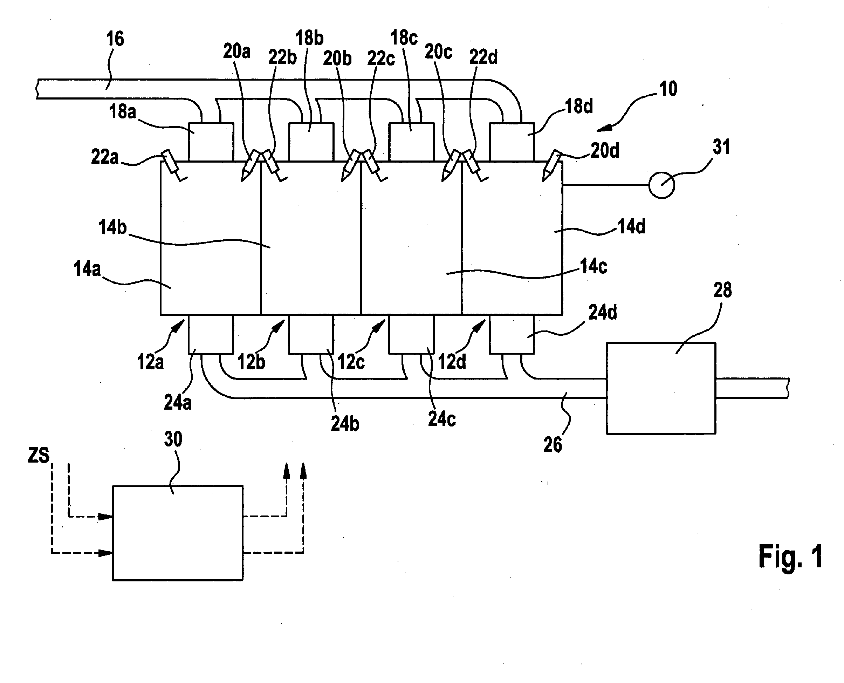

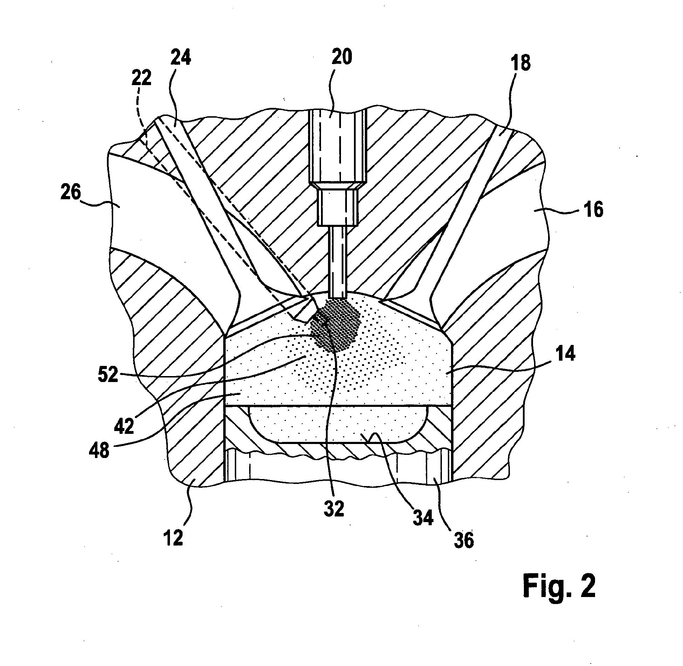

Eine Brennkraftmaschine trägt in Figur 1 insgesamt das Bezugszeichen 10. Sie dient zum Antrieb eines nicht dargestellten Kraftfahrzeugs und umfasst vier im Wesentlichen identische Zylinder 12a bis 12d mit entsprechenden Brennräumen 14a bis 14d. Ein Zylinder 12 ist in Figur 2 beispielhaft stärker detailliert dargestellt (wenn der Index a-d bei einem Bezugszeichen nicht angegeben ist, bedeutet dies hier und nachfolgend, dass die entsprechenden Ausführungen für alle gleichartigen Komponenten a-d gelten). Verbrennungsluft gelangt in die Brennräume 14a bis 14d über ein Ansaugrohr 16 und Einlassventile 18a bis 18d. Kraftstoff wird in die Brennräume 14a bis 14d jeweils durch einen Injektor 20a bis 20d eingespritzt. Die Injektoren 20a bis 20d sind an ein nicht dargestelltes "Rail" angeschlossen, in dem der Kraftstoff unter hohem Druck gespeichert ist. Beim Kraftstoff handelt es sich vorliegend um Benzin, die in Figur 1 dargestellte Brennkraftmaschine ist also eine solche mit Benzin-Direkteinspritzung ("BDE"). Denkbar ist aber auch die Verwendung eines gasförmigen Kraftstoffes, von Biokraftstoff, oder eines synthetischen Kraftstoffs.

Das in den Brennräumen 14a bis 14d befindliche Kraftstoff/Luftgemisch wird jeweils durch eine Zündkerze 22a bis 22d entzündet. Die heißen Verbrennungsabgase werden aus den Brennräumen 14a bis 14d über Auslassventile 24a bis 24d in ein Abgasrohr 26 abgeleitet. Dieses führt zu einer Katalysatoranlage 28, welche Schadstoffe im Abgas umwandelt und hierdurch das Abgas reinigt.

Der Betrieb der Brennkraftmaschine 10 wird von einer Steuer- und Regeleinrichtung 30 gesteuert und geregelt, die Signale von verschiedenen, in Figur 1 jedoch nicht dargestellten Sensoren und Aktuatoren der Brennkraftmaschine erhält, durch die bestimmte Zustandsgrößen ZS der Brennkraftmaschine 10 erfasst werden. Hierzu gehört beispielsweise ein Fahrpedalgeber, mit dem ein Benutzer der Brennkraftmaschine 10 einen Drehmomentwunsch äußern kann.

Ferner gehören zu diesen Sensoren Temperatursensoren, die beispielsweise die Temperatur eines Zylinderkopfs und/oder eines Kühlmittels der Brennkraftmaschine 10 oder einer durch das Ansaugrohr 16 strömenden Ansaugluft erfassen, ein HFM-Sensor, welcher die über das Ansaugrohr 16 in die Brennräume 14a bis 14d gelangende Luftmasse erfasst und Lambdasensoren, die im Bereich der Katalysatoranlage 28 angeordnet sind und das Verhältnis des Kraftstoff/Luftgemisches in den Brennräumen 14a bis 14d erfasst. Ein solcher Sensor ist in Figur 1 beispielhaft gezeigt und mit 31 bezeichnet. Angesteuert werden von der Steuer- und Regeleinrichtung 30 beispielsweise die Injektoren 20, die Zündkerzen 22 sowie eine in Figur 1 nicht dargestellte Drosselklappe im Ansaugrohr 16.

Wie insbesondere aus Figur 2 hervorgeht, wird bei der Brennkraftmaschine 10 ein sogenanntes "strahlgeführtes" Brennverfahren realisiert. Bei einem solchen ist der Injektor 20 vorzugsweise zentral angeordnet. Elektroden 32 der Zündkerze 22 befinden sich üblicherweise relativ nah zum Injektor 20. Ein Kolbenboden 34 eines Kolbens 36 weist eine die Ladungsschichtung unterstützende Ausgestaltung auf.

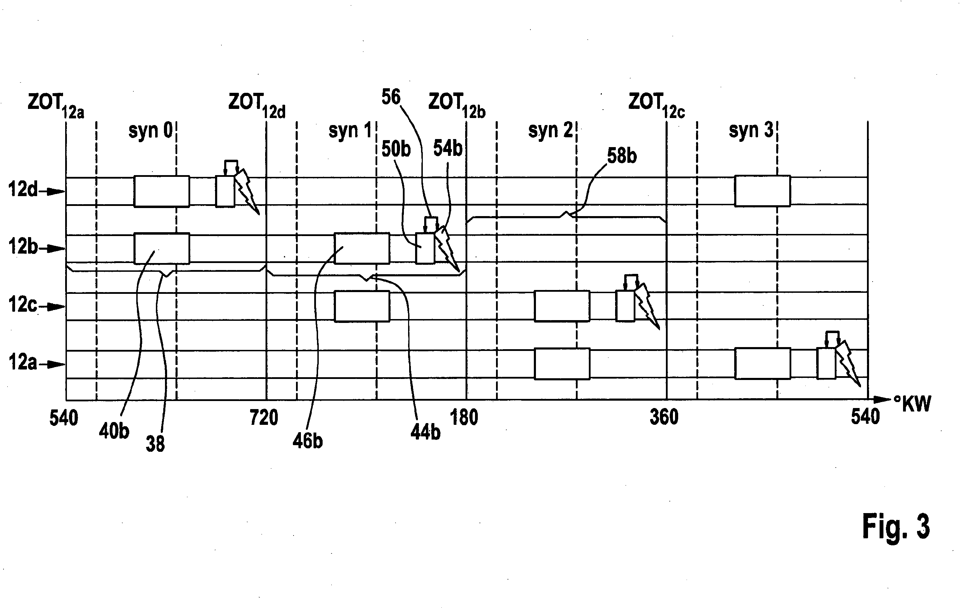

Zum Starten der Brennkraftmaschine 10 wird vorliegend ein Schichtstartverfahren eingesetzt. Dieses wird nun insbesondere unter Bezugnahme auf Figur 3 erläutert: In Figur 3 sind die einzelnen Takte eines Arbeitsspiels für jeden Zylinder 12a bis 12d über dem Kurbelwinkel (°KW) einer in den Figuren 1 und 2 nicht dargestellten Kurbelwelle der Brennkraftmaschine 10 dargestellt. Die jeweiligen zwischen einem Verdichtungstakt und einem Expansionstakt liegenden oberen Totpunkte eines Zylinders 12 sind mit ZOT₁₂ₐ bis ZOT_{12d} bezeichnet. Beispielhaft wird nun der Zylinder 12b herausgegriffen, um die während der Startphase der Brennkraftmaschine 10, also während der allerersten Einspritzungen und Verbrennungen beziehungsweise Umdrehungen der Kurbelwelle der Brennkraftmaschine 10 realisierte Einspritzstrategie zu erläutern. Diese gilt aber grundsätzlich auch für die anderen Zylinder 12a, 12c und 12d.

Während eines Ansaugtaktes 38 des Zylinders 12b wird vom Injektor 20 eine Voreinspritzung 40b in den Brennraum 14b abgegeben, und zwar im Bereich eines Kurbelwinkels von ungefähr 300-260 °KW, vorzugsweise von ungefähr 280 °KW vor dem oberen Totpunkt ZOT_{12b}. Durch diese Voreinspritzung 40b wird im Brennraum 14b ein insgesamt homogenes, also gleichmäßig im Brennraum 12b verteiltes und sehr mageres Grundgemisch erzeugt, welches in Figur 2 mit dem Bezugszeichen 42 bezeichnet ist. In einem anschließenden Verdichtungstakt 44b wird im Bereich eines Kurbelwinkels von ungefähr 80-30 °KW, vorzugsweise von ungefähr 50 °KW vor dem oberen Totpunkt ZOT_{12b} eine erste Einspritzung 46b, die sogenannte "Haupteinspritzung", in den Brennraum 14b abgesetzt. Hierdurch wird im Zentrum des Brennraums 14b eine Gemischwolke erzeugt, die fetter ist als das homogene magere Grundgemisch 42 und in Figur 2 mit 48 bezeichnet ist. Gegen Ende des Verdichtungstaktes 44b wird vom Injektor 20 eine zweite Einspritzung 50b, die sogenannte "Zündeinspritzung", in den Brennraum 14b abgegeben. Hierdurch wird in einem begrenzten lokalen Bereich um die Elektroden 32 der Zündkerze 22 eine vergleichsweise fette und kleine lokale Gemischwolke erzeugt, die in Figur 2 mit 52 bezeichnet ist.

Diese Zündeinspritzung 50 erfolgt als noch während des Verdichtungstaktes und unmittelbar (maximal ungefähr 5 °KW, vorzugsweise nur ungefähr 1 °KW) vor einer anschließenden Zündung (Bezugszeichen 54b in Figur 3), welche im Bereich eines Kurbelwinkels von ungefähr 20-10 °KW, vorzugsweise von ungefähr 15 °KW vor dem oberen Totpunkt ZOT_{12b} durchgeführt wird. Gegebenenfalls sind Zündeinspritzung und Zündung auch gleichzeitig möglich. Der Kurbelwinkel des Endes der Zündeinspritzung 50 ist dabei zeitlich an den Kurbelwinkel der Zündung 54 ("Zündwinkel") gekoppelt. Dies ist in Figur 3 durch einen Doppelpfeil mit dem Bezugszeichen 56 dargestellt. Diese Kopplung kann starr oder variabel sein, Letzteres abhängig von aktuellen Zustandsgrößen ZS der Brennkraftmaschine 10. Der exakte Abstand zwischen Zündeinspritzung 50b und Zündung 54b kann dabei beispielsweise mittels eines Kennfelds vorgegeben werden.

Die Aufteilung der Einspritzmenge auf die Voreinspritzung 40b, die Haupteinspritzung 46b und die Zündeinspritzung 50b, sowie die Kurbelwinkel der Voreinspritzung 40b und der Haupteinspritzung 46b werden von der Steuer- und Regeleinrichtung 30 abhängig von einer Motortemperatur, einer Umgebungstemperatur, einer Motordrehzahl und einer Ansauglufttemperatur sowie von einer relativen Füllung, einer Temperatur des Zylinderkopfs der Brennkraftmaschine 10 und dem Kurbelwinkel der Zündung 54b (Zündwinkel) festgelegt.

Bei der Ausführungsform gemäß Figur 3 wird während der Startphase eine Voreinspritzung 40 während des Ansaugtaktes 38 abgesetzt. Bei einem nicht dargestellten Ausführungsbeispiel wird auf diese Voreinspritzung verzichtet. Bei einem entsprechenden Verfahren würden also nur die Haupteinspritzung 46b und die Zündeinspritzung 50b während des Verdichtungstaktes 44b abgesetzt werden.

Die in Figur 3 dargestellte Einspritzstrategie wird während der Startphase, also während der allerersten Umdrehungen der Kurbelwelle der Brennkraftmaschine 10 angewendet. Danach wird auf eine Homogen-Split-Einspritzung übergegangen, bei welcher der Zündwinkel am Beispiel des Zylinders 12b im Expansionstakt 58b nach dem oberen Totpunkt ZOT_{12b} liegt. Durch diese Spätverstellung des Zündwinkels wird der Verbrennungsschwerpunkt nach spät verstellt, was zu einer Erhöhung der Abgastemperatur und damit zu einer verbesserten Erwärmung der Katalysatoranlage 28 führt. Detaillierte Erläuterungen zur Homogen-Split-Einspritzung finden sich in der Veröffentlichung "Die neue Emissionsstrategie der Benzin-Direkt-Einspritzung", MTZ 11/2003, Seiten 916 bis 923, deren Offenbarung hiermit ausdrücklich auch zum Gegenstand der vorliegenden Ausführungen gemacht wird.

## Patentansprüche

1. Verfahren zum Betreiben einer Brennkraftmaschine (10), bei dem Kraftstoff mindestens während eines Verdichtungstakts (44) direkt in mindestens einen Brennraum (14) so eingespritzt wird, dass im Brennraum (14) ein geschichtetes Gemisch vorliegt, welches dann fremdgezündet wird (54),
dass Kraftstoff während des Verdichtungstakts (44) durch mindestens eine Haupteinspritzung (46) und eine Zündeinspritzung (50) eingebracht wird, wobei die Zündeinspritzung (50) unmittelbar vor einer Zündung (54) erfolgt, wobei die Zündeinspritzung (50) wenigstens mittelbar an den Kurbelwinkel der Zündung (54) gekoppelt ist,
und wobei es während einer Startphase für einen Schichtstart der Brennkraftmaschine (10) angewendet wird,
**dadurch gekennzeichnet, dass** nach dem Ende der Startphase eine Katalysatorheizphase mit einer Homogen-Split-Einspritzung mit einem Kurbelwinkel der Zündung durchgeführt wird, der nach dem oberen Totpunkt (ZOT) zwischen Verdichtungstakt (44) und Expansionstakt (58) liegt.

2. Verfahren nach einem der vorhergehende Ansprüche, **dadurch gekennzeichnet, dass** der Abstand der Zündeinspritzung (50) von der Zündung (54) wenigstens zeitweise starr ist.

3. Verfahren nach einem der vorhergehende Ansprüche, **dadurch gekennzeichnet, dass** der Abstand der Zündeinspritzung (50) von der Zündung (54) wenigstens zeitweise von mindestens einer Zustandsgröße (ZS) der Brennkraftmaschine (10) abhängt.

4. Verfahren nach einem der vorhergehenden Ansprüche, **dadurch gekennzeichnet, dass** zusätzlich mindestens eine Voreinspritzung (40) während eines Ansaugtakts (38) erfolgt, bevorzugt im Bereich eines Kurbelwinkels von ungefähr 300-260 °KW, stärker bevorzugt von ungefähr 280 °KW vor dem oberen Totpunkt (ZOT) zwischen Verdichtungstakt (44) und Expansionstakt (58) .

5. Verfahren nach einem der vorhergehenden Ansprüche, **dadurch gekennzeichnet, dass** die Aufteilung der Einspritzmengen der Einspritzungen (40, 46, 50) und/oder die Kurbelwinkel der Einspritzungen (40, 46, 50) von mindestens einer Umgebungszustandsgröße, insbesondere einer Umgebungstemperatur und/oder einer Ansauglufttemperatur, und/oder von mindestens einer Betriebsgröße der Brennkraftmaschine (10), insbesondere einer relativen Füllung und/oder einer Temperatur einer Komponente der Brennkraftmaschine (10) und/oder einem Kurbelwinkel der Zündung (54) und/oder einer Drehzahl einer Kurbelwelle, abhängt.

6. Computerprogramm, **dadurch gekennzeichnet, dass** es zur Anwendung in einem Verfahren nach einem der vorhergehenden Ansprüche programmiert ist.

7. Elektrisches Speichermedium für eine Steuer- und/oder Regeleinrichtung (30) einer Brennkraftmaschine (10), **dadurch gekennzeichnet, dass** auf ihm ein Computerprogramm zur Anwendung in einem Verfahren der Ansprüche 1 bis 5 abgespeichert ist.

8. Steuer- und/oder Regeleinrichtung (30) für eine Brennkraftmaschine (10), **dadurch gekennzeichnet, dass** sie zur Anwendung in einem Verfahren nach einem der Ansprüche 1 bis 5 programmiert ist.

## Claims

1. Method for operating an internal combustion engine (10), in which fuel is injected directly into at least one combustion chamber (14), during at least one compression stroke (44), in such a way that a stratified mixture is present in the combustion chamber (14) and is then externally ignited (54),
in that during the compression stroke (44) fuel is introduced by means of at least one main injection (46) and an ignition injection (50), wherein the ignition injection (50) occurs directly before an injection (54), wherein the ignition injection (50) is coupled at least indirectly to the crank angle of the ignition (54),
and wherein it is used for a stratified start of the internal combustion engine (10) during a starting phase,
**characterized in that** after the end of the starting phase a catalytic converter heating phase is carried out with the homogeneous split injection with a crank angle of the ignition which is after the top dead centre (TDC) between the compression stroke (44) and the expansion stroke (58).

2. Method according to one of the preceding claims, **characterized in that** the distance between the ignition injection (50) and the ignition (54) is at least temporarily rigid.

3. Method according to one of the preceding claims, **characterized in that** the distance between the ignition injection (50) and the ignition (54) depends at least temporarily on at least one state variable (ZS) of the internal combustion engine (10).

4. Method according to one of the preceding claims, **characterized in that** in addition at least one pre-injection (40) takes place during an intake stroke (38), preferably in the region of a crank angle of approximately 300 - 260° CA, and more preferably of approximately 280° CA before the top dead centre (TDC) between the compression stroke (44) and the expansion stroke (58).

5. Method according to one of the preceding claims, **characterized in that** the apportionment of the injection quantities of the injections (40, 46, 50) and/or the crank angles of the injections (40, 46, 50) depends on at least one ambient state variable, in particular an ambient temperature and/or an intake air temperature and/or at least one operating variable of the internal combustion engine (10), in particular relative filling and/or temperature of a component of the internal combustion engine (10) and/or a crank angle of the ignition (54) and/or a rotational speed of a crank angle.

6. Computer program, **characterized in that** it is programmed for application in a method according to one of the preceding claims.

7. Electrical storage medium for an open-loop and/or closed-loop control device (30) of an internal combustion engine (10), **characterized in that** a computer program for application in a method according to Claims 1 to 5 is stored thereon.

8. Open-loop and/or closed-loop control device (30) for an internal combustion engine (10), **characterized in that** it is programmed for application in a method according to one of Claims 1 to 5.

## Revendications

1. Procédé pour faire fonctionner un moteur à combustion interne (10) dans lequel du carburant est injecté au moins pendant un temps de compression (44) directement dans au moins une chambre de combustion (14) de telle sorte qu'un mélange stratifié se forme dans la chambre de combustion (14), lequel est allumé ensuite par voie extérieure (54),
du carburant étant introduit pendant le temps de compression (44) par au moins une injection principale (46) et une injection d'allumage (50), l'injection d'allumage (50) se produisant directement avant un allumage (54), l'injection d'allumage (50) étant accouplée au moins indirectement à l'angle de vilebrequin de l'allumage (54),
le procédé étant utilisé pendant une phase de démarrage, pour un démarrage stratifié du moteur à combustion interne (10),
**caractérisé en ce qu'**après la fin de la phase de démarrage, une phase de chauffage du catalyseur est effectuée avec une injection homogène-divisée avec un angle de vilebrequin de l'allumage qui est situé après le point mort haut (ZOT) entre le temps de compression (44) et le temps d'expansion (58).

2. Procédé selon l'une quelconque des revendications précédentes, **caractérisé en ce que** l'intervalle entre l'injection d'allumage (50) et l'allumage (54) est fixe au moins temporairement.

3. Procédé selon l'une quelconque des revendications précédentes, **caractérisé en ce que** l'intervalle entre l'injection d'allumage (50) et l'allumage (54) dépend au moins temporairement d'au moins une grandeur d'état (ZS) du moteur à combustion interne (10).

4. Procédé selon l'une quelconque des revendications précédentes, **caractérisé en ce qu'**en outre au moins une pré-injection (40) a lieu pendant un temps d'admission (38), de préférence dans la plage d'un angle de vilebrequin d'environ 300-260 °VIL, plus préférablement d'environ 280 °VIL avant le point mort haut (ZOT) entre le temps de compression (44) et le temps d'expansion (58).

5. Procédé selon l'une quelconque des revendications précédentes, **caractérisé en ce que** la division des quantités d'injection des injections (40, 46, 50) et/ou les angles de vilebrequin des injections (40, 46, 50) dépendent d'au moins une grandeur d'état de l'environnement, en particulier d'une température de l'environnement et/ou d'une température de l'air d'admission, et/ou d'au moins une grandeur de fonctionnement du moteur à combustion interne (10), en particulier d'un remplissage relatif et/ou d'une température d'un composant du moteur à combustion interne (10) et/ou d'un angle de vilebrequin de l'allumage (54) et/ou d'une vitesse de rotation d'un vilebrequin.

6. Programme informatique, **caractérisé en ce qu'**il est programmé pour l'utilisation dans un procédé selon l'une quelconque des revendications précédentes.

7. Support mémoire électrique pour un dispositif de commande et/ou de régulation (30) d'un moteur à combustion interne (10), **caractérisé en ce qu'**un programme informatique pour l'utilisation dans un procédé selon les revendications 1 à 5 est mémorisé sur celui-ci.

8. Dispositif de commande et/ou de régulation (30) pour un moteur à combustion interne (10), **caractérisé en ce qu'**il est programmé pour l'utilisation dans un procédé selon l'une quelconque des revendications 1 à 5.
